# EUROPEAN PATENT APPLICATION

(11) **EP 1 130 881 A1**
(43) Date of publication of application: **05.09.2001**
(21) Application number: 00830157.4
(22) Date of filing: 29.02.2000
(51) Int. Cl.: H04M 1/05, H04R 1/10

(54) **Headset with ear attachment system**

(71) Applicant: Silicomp SPA, 20090 Opera (Milano) (IT)
(72) Inventor: Vicamini, Marco, 20090 Opera (Milano) (IT)
(74) Representative: Petruzziello, Aldo

(57) **Abstract**

A headset comprising at least one earphone assembly (1) to support electroacoustic transducers (8, 30, 31), attachment means (40) to attach said earphone assembly to the lobe (11) of the user's ear, and acoustic signal conveying means (7, 8, 15, 16) and (4, 5) to convey the acoustic signal from the earphone assembly to the user's ear and from the user's mouth to the earphone assembly.

## Description

The present invention refers to a headset with a system for attaching the earphone assembly associated therewith to the ear.

Headsets generally comprise an earphone assembly consisting of at least one electroacoustical transducer capable of generating from an electric signal an audio signal that can be heard by the user.

In widespread use are headsets comprising two transducers mechanically connected by means of an elastic headband, generally adjustable, in such a manner that each transducer can be positioned level with the user's auricle. These headsets, however, prove rather awkward and bulky.

Also known are headsets consisting of a single earphone element that is positioned in the inner part of the user's auricle. This type of headset with a single earphone is certainly less bulky but has a drawback due to the fact that the entire weight of the earphone with the relative cable is supported by the inner part of the auricle. For this reason, after prolonged use, the user may experience discomfort in the ear which sometimes obliges him to remove the earphone.

Telephone-type headsets further comprise a microphone connected to the earphone element and adjustable so as to be able to be positioned near the mouth of the user. Clearly the microphone represents an additional weight for the earphone element, causing the pressure exerted thereby in the inner part of the auricle to increase.

This problem becomes more serious particularly for users who are obliged to wear this type of headset for long periods of time.

The object of the invention is to reduce these drawbacks, providing a headset with a system of attachment to the ear that is convenient, comfortable and aesthetically acceptable.

This object is achieved according to the invention with the characteristics listed in appended independent claim 1.

Advantageous embodiments of the invention are apparent from the dependent claims.

The headset with a system for attachment to the ear according to the invention provides a clip-type attaching system joined to the earphone element so as to be able to clip on to the user's earlobe. In this manner the whole weight of the earphone element is borne by the ear lobe and not by the inner part of the ear, thus avoiding discomfort to the user.

In order to carry the voice from the mouth of the user to the earphone, a voice tube or microphone is provided, the microphone being supported by a rod connected to the earphone so as to be able to be positioned near the mouth. A loudspeaker (transducer) connected by means of wires to the earphone element is provided for listening by the user.

The clip-type attachment system applied to the earphone element serves the purpose of attaching to the earlobe, counterbalancing the weight of the microphone with relative support rod, and bearing the weight of the loudspeaker positioned in the ear with said earphone element. The system of attachment to the earlobe and the consequent balancing of the weights of the elements of the headset reduce the troublesome drawbacks related to the headsets of the prior art.

Further characteristics of the invention will be made clearer by the detailed description that follows, referring to a purely exemplary and therefore non-limiting embodiment thereof, illustrated in the appended drawings, in which:
Figure 1 is a perspective view of the element for attachment to the ear of the headset according to the invention, fitted to a user;

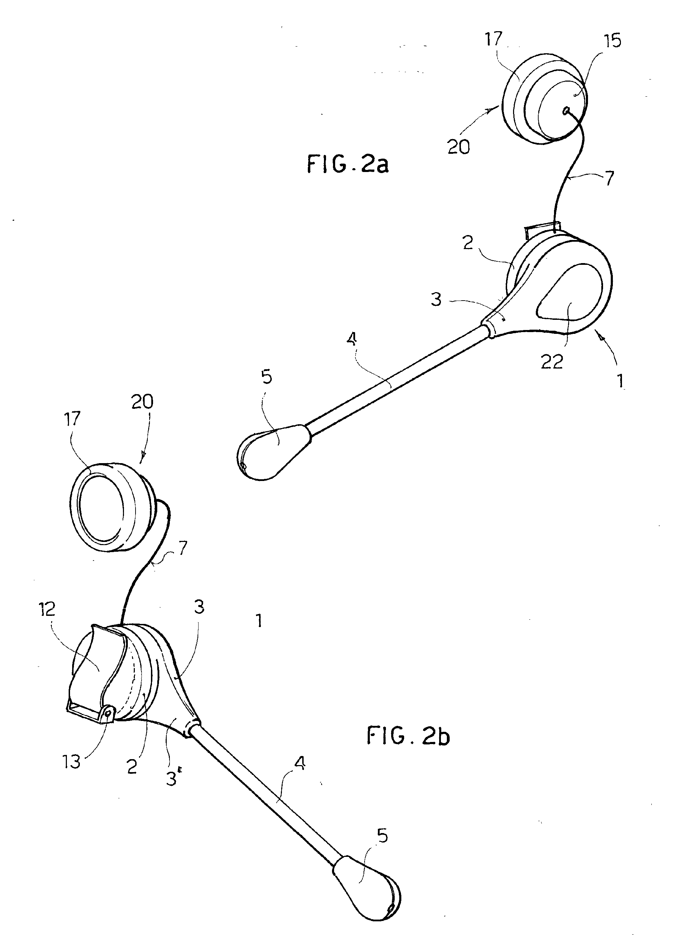

Figures 2a and 2b are respectively two enlarged perspective views from different angles of the headset with the element for attachment to the ear according to the invention;

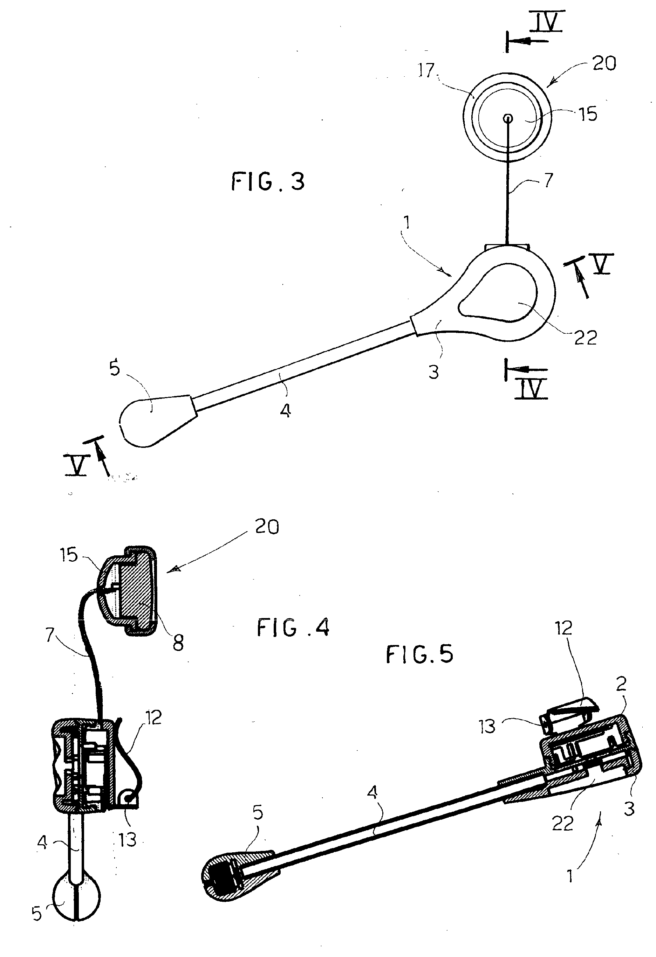

Figure 3 is a side view of the headset with element for attachment to the ear according to the invention;
Figure 4 is a section along the line of section IV-IV of Figure 3;
Figure 5 is a section along the line of section V-V of Figure 3;
Figure 6 is an axonometric view, exploded, of the headset with the element for attachment to the ear according to the invention.

A headset with a system for attachment to the ear according to the invention is described with the aid of the figures. In the present detailed description reference is made to a headset comprising a single earphone element indicated as a whole with reference numeral 1. However, the system for attachment to the ear according to the invention can also be applied to headsets with two earphone elements (one earphone for the right ear and another earphone for the left ear).

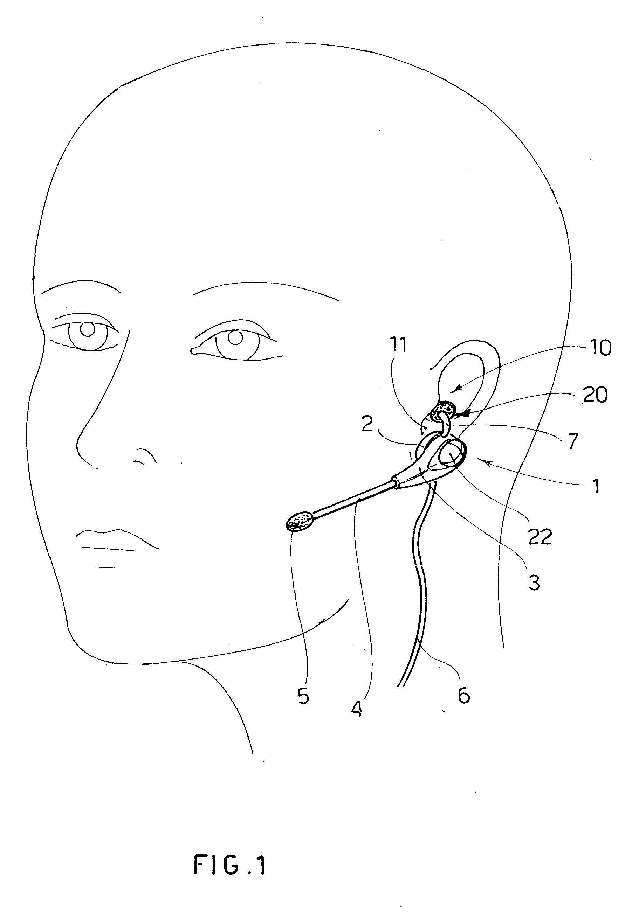

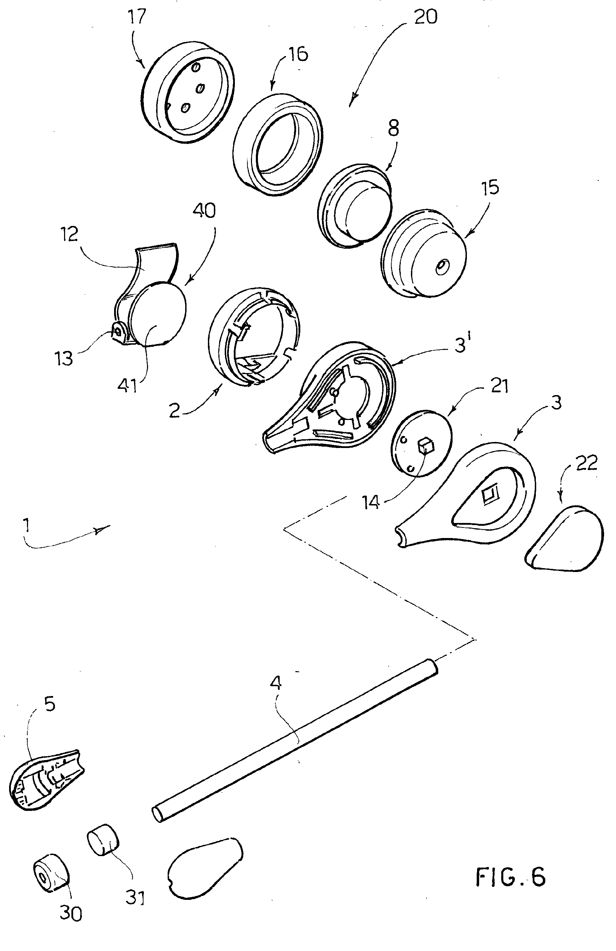

As shown in Figure 6, the earphone assembly 1 comprises two half-shells 3 and 3'which when coupled support a rod 4 that supports at its tip a microphone 5 formed by two half-shells that contain transducer elements 30 and 31 to convert the acoustic signal into an electrical signal. The microphone 5 is destined to come into position near the user's mouth. In this manner the audio signal, representing the user's voice, is conveyed from the user's mouth to the earphone assembly and then, through a wire 6 (Figure 1), the audio signal is sent to a telephone apparatus to which the earphone element 1 is connected.

The microphone 5 can also be provided inside the earphone assembly 1 and in this case the user's voice is conveyed from the mouth to the earphone assembly 1, by means of a normal voice tube.

A flange or metal ring 2 that supports a clip 40 is applied to the half-shell 3'. The clip 40 comprises a plate 41 that engages with the flange 2. An elastic jaw 12 with a substantially wavy shape is connected to the plate 41. The elastic jaw 12 is hinged to the plate by means of a hinge 13. The hinge 13 keeps the jaw 12 in place near the plate 41. By applying force with the fingers the action of the elastic jaw 12 is overcome and the jaw 12 is brought apart from the plate 41.

In this manner the earphone assembly 1 can be positioned in such a manner that the earlobe 11 is situated between the elastic jaw 23 and the plate 41. By bringing the elastic jaw 12 toward the earlobe 11, said lobe is clipped between the jaw 12 and the plate 41 which is integral with the flange 2 and therefore with the earphone assembly 1. In this manner the whole earphone assembly 1 is supported by the earlobe 11.

Both the jaw 12 and plate 41 and the flange 2 are made of such a size and shape as not to cause discomfort to the user.

The earphone assembly 1 is connected to a transducer assembly 20 by means of electrical cables 7, possibly covered by a sheath. The transducer assembly 20 comprises a half-shell 15 that supports an electricoacoustical transducer 8 (loud speaker) which converts the electrical signal to an acoustic signal. The transducer 8 is retained in the half-shell 15 by means of a rubber ring 16 and is covered by a possible covering 17 of soft material, such as sponge.

The length of the cable 7 and the surface of the transducer assembly 20 are of such a size as to allow the transducer assembly to be accommodated inside the auricle, reducing to a minimum the possible causes of discomfort to the user.

The surface of the half-shell 3 destined to face outwards can have an interchangeable element that can be a decorative element or a visual signalling element. As shown in Figure 6, said interchangeable element is a LED 14 with a coloured light, supported by a plate 21 inserted inside the half-shell 3 and powered by the power supply provided in the earphone assembly 1. In this case the outward facing part of the half-shell 3 has a transparent element 22 that lets through the light of the LED 14. The LED 14 can give off light only when the user of the headset is engaged in conversation, indicating visually to others that the operator is engaged.

In another solution the LED 14 can be eliminated and the transparent element 22 can be replaced with an item of costume jewellery or jewellery to decorate the headset according to the invention.

Numerous changes or variations of detail within the reach of a skilled in the art can be made to the present embodiment, without departing from the scope of the invention expressed by the appended claims.

## Claims

1. A headset comprising at least one earphone assembly (1) to support electroacoustic transducers (8, 30, 31) for transmiting/receiving an acoustic signal, characterized in that attachment means are provided to attach said earphone assembly (1) to the lobe (11) of the user's ear.

2. A headset according to claim 1, characterized in that said attachment means comprise a clip system (40).

3. A headset according to claim 2, characterized in that said clip system comprises an elastic jaw (12) connected by means of hinge means (13) to a plate (14) integral with said earphone assembly (1) so as to clip the earlobe (11) between said jaw (12) and said plate (41).

4. A headset according to any one of the preceding claims, characterized in that said earphone assembly (1) is operationally connected by means of electrical wires (7) to a transducer assembly (20) destined to be positioned inside the auricle (10) of the user's ear.

5. A headset according to claim 4, characterized in that said transducer assembly (20) comprises a half-shell (15) wherein is supported an electroacoustical transducer (8) retained by means of a rubber ring (16).

6. A headset according to claim 4 or 5, characterized in that said transducer assembly (20) is partially covered with spongy material (17) to reduce the discomfort to the operator due to positioning thereof inside the auricle (10) of the ear.

7. A headset according to any one of the preceding claims, characterized in that on the side of the earphone assembly (1) destined to face outward provision is made for an interchangeable object (14, 22) for ornament or visual signalling.

8. A headset according to any one of the preceding claims, characterized in that said interchangeable ornamental or visual signalling object is a LED (14) or an item of costume jewellery or jewellery.

9. A headset according to any one of the preceding claims, characterized in that a tube (4) supporting a microphone (5) or a voice tube is connected to said earphone assembly (1) to convey the acoustic signal from the user's mouth toward said earphone assembly (1).
